# EUROPÄISCHE PATENTSCHRIFT

(11) **EP 3 489 067 B1**
(45) Veröffentlichungstag und Bekanntmachung des Hinweises auf die Patenterteilung: **07.12.2022**
(21) Anmeldenummer: 18198102.8
(22) Anmeldetag: 02.10.2018
(51) Int. Cl.: B60K 37/06, G06F 3/048

(54) **BEDIENSYSTEM FÜR EINE LANDWIRTSCHAFTLICHE ARBEITSMASCHINE**
OPERATING SYSTEM FOR AN AGRICULTURAL MACHINE
SYSTÈME DE FONCTIONNEMENT POUR UN ENGIN AGRICOLE

(30) Priorität: 22.11.2017 DE 102017127560
(43) Veröffentlichungstag der Anmeldung: 29.05.2019
(73) Patentinhaber: CLAAS Selbstfahrende Erntemaschinen GmbH, 33428 Harsewinkel (DE)
(72) Erfinder: Losch, Michael, 33775 Versmold (DE); Neu, Sebastian, 49196 Bad Laer (DE); Giesguth, Christian, 33165 Lichtenau (DE); Grove, Carsten, 48361 Beelen (DE); Kirchbeck, Alexander, 48317 Drensteinfurt (DE); Dierkes, Christoph, 49479 Ibbenbüren (DE); Lahmann, Dirk, 33790 Halle/Westf. (DE)
(74) Vertreter: CLAAS Gruppe

(56) Entgegenhaltungen:
- EP-A1- 2 277 369
- WO-A1-2014/160917
- US-A1- 2019 047 620

## Beschreibung

Die vorliegende Erfindung betrifft ein Bediensystem für eine landwirtschaftliche Arbeitsmaschine, gemäß dem Oberbegriff des Anspruches 1. Des Weiteren betrifft die vorliegende Erfindung eine landwirtschaftliche Arbeitsmaschine, insbesondere eine selbstfahrende Erntemaschine.

Aus der DE 10 2009 034 154 A1 ist ein Bediensystem mit einem als Multifunktionsgriff ausgebildeten Fahrhebel bekannt, an dessen Griffteil mehrere Bedienelement angeordnet sind. Mittels des Multifunktionsgriffs und der an de, Griffteil angeordneten Bedienelemente sind Einstellungen einer landwirtschaftlichen Arbeitsmaschine einstell- und veränderbar, welche das Betriebsverhalten beeinflussen. Der in der DE 10 2009 034 154 A1 beschriebene Multifunktionsgriff zeichnet sich durch eine ergonomische Gestaltung aus, die ein ermüdungsfreies Bedienen der Arbeitsmaschine ermöglichen soll.

Aus der EP 1 288 763 B1 ist ein Bediensystem für eine landwirtschaftliche Arbeitsmaschine der eingangs genannten Art bekannt. Das Bediensystem umfasst eine Steuerungsvorrichtung, die mit einer Anzeigeeinheit, einem als Multifunktionsgriff ausgebildeten Fahrhebel sowie einem Bedienpanel signaltechnisch verbunden ist. Der Multifunktionsgriff weist mehrere Mehrfach-Bedienelemente auf, die als Wipp- oder Kippschalter ausgebildet sind, denen arbeitsmaschinenspezifische erste Steuerfunktionen zur Betätigung von Arbeitsaggregaten zugeordnet sind, die während des laufenden Betriebs der Arbeitsmaschine häufig betätigt werden. Zusätzlich ist ein Auswahl/Übergabe-Bedienelement vorgesehen, welchem neben einer ersten Steuerfunktion zwei weitere sekundäre Steuerfunktionen zur Betätigung von Arbeitsaggregaten zugewiesen sind, die einer Betätigung eines Arbeitsaggregates entsprechen, welche seltener vorgenommen wird und daher durch eine Betätigung von an einem Bedienpanel angeordneten Bedienelementen vorgenommen werden, das zu dem Multifunktionsgriff beabstandet angeordnet ist. Diese Steuerfunktionen sind durch eine Variation der Schaltstellung des Auswahl/Übergabe-Bedienelement auswählbar. In Abhängigkeit von der jeweiligen Schaltstellung überträgt das Auswahl/Übergabe-Bedienelement eine der Schaltstellung entsprechende Steuerfunktion auf eines der Mehrfach-Bedienelemente an dem Multifunktionsgriff, so dass durch dieses Mehrfach-Bedienelement wahlweise eine der durch das Auswahl/Übergabe-Bedienelement vorgebbaren Steuerfunktionen ausführbar ist, um ein Arbeitsaggregat der Arbeitsmaschine zu betätigen.

Aus der WO2014/160917 A1 ist ein Bediensystem für eine landwirtschaftliche Arbeitsmaschine, umfassend eine Steuerungsvorrichtung, die mit einer Anzeigeeinheit, einem Fahrhebel sowie einem Bedienpanel signaltechnisch verbunden ist, und wobei die Anzeigeeinheit als ein berührungssensitiver Bildschirm mit einem oder mehreren Visualisierungsbereichen sowie mehreren virtuellen Bedienelementen ausgeführt ist, bekannt.

Ausgehend vom vorstehend genannten Stand der Technik stellt sich der vorliegenden Erfindung die Aufgabe, ein Bediensystem für eine landwirtschaftliche Arbeitsmaschine bereitzustellen, welches sich durch eine effizientere Bedienbarkeit auszeichnet.

Diese Aufgabe wird erfindungsgemäß durch ein Bediensystem gemäß dem Anspruch 1 sowie durch eine landwirtschaftliche Arbeitsmaschine gemäß Anspruch 12 gelöst.

Vorteilhafte Weiterbildungen sind Gegenstand der Unteransprüche.

Gemäß dem Anspruch 1 wird ein Bediensystem für eine landwirtschaftliche Arbeitsmaschine vorgeschlagen, umfassend eine Steuerungsvorrichtung, die mit einer Anzeigeeinheit, einem Fahrhebel sowie einem Bedienpanel signaltechnisch verbunden ist, wobei zumindest der Fahrhebel mehrere Bedienelemente umfasst. Um eine effizientere Bedienbarkeit zu erreichen, ist erfindungsgemäß vorgesehen, dass die Anzeigeeinheit als ein berührungssensitiver Bildschirm mit einem oder mehreren Visualisierungsbereichen sowie mehreren virtuellen Bedienelementen ausgeführt ist, wobei jeweils einem der Bedienelemente der Anzeigeeinheit, des Fahrhebels und des Bedienpanels eine bevorzugte Schnellauswahlfunktion aus einer Vielzahl von verschiedenen Schnellauswahlfunktionen zur Einstellung von einem einer jeweiligen Schnellauswahlfunktion zugeordneten Betriebsparameter der Arbeitsmaschine vorkonfiguriert zugeordnet ist, welcher mittels der Anzeigeeinheit bei einer Aktivierung darstellbar ist, wobei die dem jeweiligen Bedienelement zugeordnete Schnellauswahlfunktion mittels der Anzeigeeinheit und/oder des Fahrhebels und/oder des Bedienpanels aktivierbar ist. Die Vorkonfigurierung der Belegung des jeweiligen Bedienelementes mit einer bevorzugten Schnellauswahlfunktion erfolgt dabei vorzugsweise mittels der Anzeigeeinheit. Die Aktivierung der bevorzugten Schnellauswahlfunktion erfolgt also mittels einer Bedienkomponente, welche die Anzeigeeinheit, den Fahrhebel und/oder das Bedienpanel umfasst. Die Zuordnung einer bevorzugten Schnellauswahlfunktion auf die verschiedenen Bedienkomponenten des Bediensystems, d.h. der Anzeigeeinheit, dem Fahrhebel und dem Bedienpanel, ermöglicht einer Bedienperson in unterschiedlichen Betriebssituationen der Arbeitsmaschine einen schnellen und unmittelbaren Zugriff auf den durch die bevorzugte Schnellauswahlfunktion abgebildeten Betriebsparameter, wodurch die Ein- bzw. Verstellung dieses Betriebsparameter eines Arbeitsaggregates der Arbeitsmaschine vereinfacht und komfortabler wird.

In bevorzugter Weiterbildung kann die vorkonfigurierte Belegung des jeweiligen Bedienelementes mit der bevorzugten Schnellauswahlfunktion mittels der Anzeigeeinheit und/oder des Fahrhebels und/oder des Bedienpanels veränderbar sein. Dies erlaubt eine schnelle und flexible Anpassung der Schnellauswahlfunktion während wechselnder Betriebssituationen, zu deren Durchführung die Anpassung jeweils eines spezifischen Arbeitsaggregates vorrangig erforderlich ist. In Abhängigkeit von der jeweiligen Betriebssituation der Arbeitsmaschine liegt der Schwerpunkt der Bedienung auf jeweils unterschiedlichen Aggregaten, deren Betriebsparameter einer häufigeren Anpassung bedürfen.

Bevorzugt kann eine durchgeführte Konfigurationsänderung der zumindest einen Schnellauswahlfunktion durch die Steuerungsvorrichtung auf ein Bedienelement der Anzeigeeinheit, des Fahrhebels und/oder des Bedienpanels übertragbar sein. Somit kann eine durch das jeweilige Bedienelement einer der Bedienkomponenten vorgenommene Änderung der Belegung des jeweiligen Bedienelementes mit der bevorzugten Schnellauswahlfunktion automatisch auf die anderen Bedienkomponenten übertragen und von diesen übernommen werden. Dadurch entfällt eine zusätzliche Anpassung der geänderten bevorzugten Schnellauswahlfunktion entfällt für die jeweils anderen Komponenten des Bediensystems.

Weiterhin kann eine Betätigung des Bedienelementes an dem Fahrhebel oder dem Bedienpanel, welchem die bevorzugte Schnellauswahlfunktion zugewiesen ist, eine korrespondierende Änderung der Darstellung auf dem Bildschirm der Anzeigeeinheit bewirken.

Dazu kann durch die Betätigung des Bedienelementes ein Dialogfeld in einem Visualisierungsbereich auf dem Bildschirm der Anzeigeeinheit darstellbar sein, welches die Konfiguration der den Schnellauswahlfunktionen zugeordneten Betriebsparameter der Arbeitsmaschine ermöglicht. In dem Dialogfeld werden die mit den Schnellauswahlfunktionen korrespondierenden Betriebsparameter visualisiert, die zur Verfügung stehen, um die verschiedenen Arbeitsaggregate der Arbeitsmaschine zu parametrieren.

Hierzu kann die Auswahl einer Schnellauswahlfunktion innerhalb des Dialogfeldes durch die Betätigung zumindest eines, insbesondere als Mehrfach-Bedienelement ausgeführten, Bedienelementes an dem Fahrhebel oder dem Bedienpanel oder durch eine Berührung des Bildschirms der Anzeigeeinheit von einem der innerhalb des Dialogfeldes dargestellten Schnellauswahlfunktionsfelder erfolgen. Die Bedienperson kann somit innerhalb des Dialogfeldes navigieren, um eine von der bevorzugten Schnellauswahlfunktion abweichende Schnellauswahlfunktion auszuwählen. Diese Auswahl ermöglicht eine Änderung der Belegung des jeweiligen Bedienelementes mit einer anderen bevorzugten Schnellauswahlfunktion. Die Navigation durch das Dialogfeld kann endlos umlaufend erfolgen, d.h. nachdem innerhalb des Dialogfeldes die letzte Schnellauswahlfunktion aus der Liste der Schnellauswahlfunktionen erreicht wurde, wird mit der ersten Schnellauswahlfunktion fortgesetzt und umgekehrt.

Weiterhin kann nach erfolgter Auswahl einer Schnellauswahlfunktion ein Einstellungsmenü, vorzugsweise innerhalb des Dialogfeldes, einblendbar sein, welches eine Veränderung des der Schnellauswahlfunktion zugeordneten Betriebsparameters ermöglicht. Die Einstellung kann dabei mittels auf der Anzeigeeinheit darstellbarer virtueller Tasten, zumindest einen Bedienelement des Bedienpanels oder eines zumindest einem Bedienelement an dem Fahrhebel erfolgen.

Dabei kann die Veränderung des Betriebsparameters durch eine Berührung von auf dem Bildschirm dargestellten virtuellen Schaltflächen oder durch die Betätigung von zumindest einem Bedienelement des Fahrhebels oder des Bedienpanels durchführbar sein. Bevorzugt können die hierfür vorgesehenen Bedienelemente des Fahrhebels und des Bedienpanels als Mehrfach-Bedienelemente ausgeführt sein.

Gemäß einer vorteilhaften Weiterbildung kann die Steuerungsvorrichtung dazu eingerichtet sein, die Darstellung des Dialogfeldes automatisch innerhalb eines vorgebbaren Zeitfensters zu beenden. Während des aktiv dargestellten Dialogfeldes vorgenommene Änderungen können dabei nach Ablauf des Zeitfensters automatisch abgespeichert werden.

Insbesondere kann auf dem Bildschirm ein permanent dargestellter Anzeigenbereich vorgesehen sein, der unter anderem der Darstellung eines Einstellwertes eines der bevorzugten Schnellauswahlfunktion zugeordneten Parameters eines Arbeitsaggregates dient. Auf diese Weise ist der Bedienperson der jeweilige Einstellwert präsent, der mit der bevorzugten Schnellauswahlfunktion korrespondiert.

Weiterhin wird die eingangs gestellte Aufgabe durch eine landwirtschaftliche Arbeitsmaschine, insbesondere eine selbstfahrende Erntemaschine, mit einem Bediensystem nach einem der Ansprüche 1 bis 11 gelöst. Die landwirtschaftliche Arbeitsmaschine ist besonders bevorzugt als selbstfahrender Mähdrescher oder Feldhäcksler ausgebildet.

Die vorliegende Erfindung wird nachstehend anhand eines in den Zeichnungen dargestellten Ausführungsbeispieles näher erläutert.

Es zeigen:
- Fig. 1: eine schematische Seitenansicht eines als Feldhäckslers ausgeführten Arbeitsmaschine;
- Fig. 2: eine schematische Darstellung eines Bediensystems für eine Arbeitsmaschine;
- Fig. 3: eine schematische Darstellung der Anzeigeeinheit;
- \Fig. 4: eine nach Betätigung einer Schnellauswahltaste im Dialogfeld sich darstellende Navigationsebene zur Einstellung eines Betriebsparameters der Arbeitsmaschine.

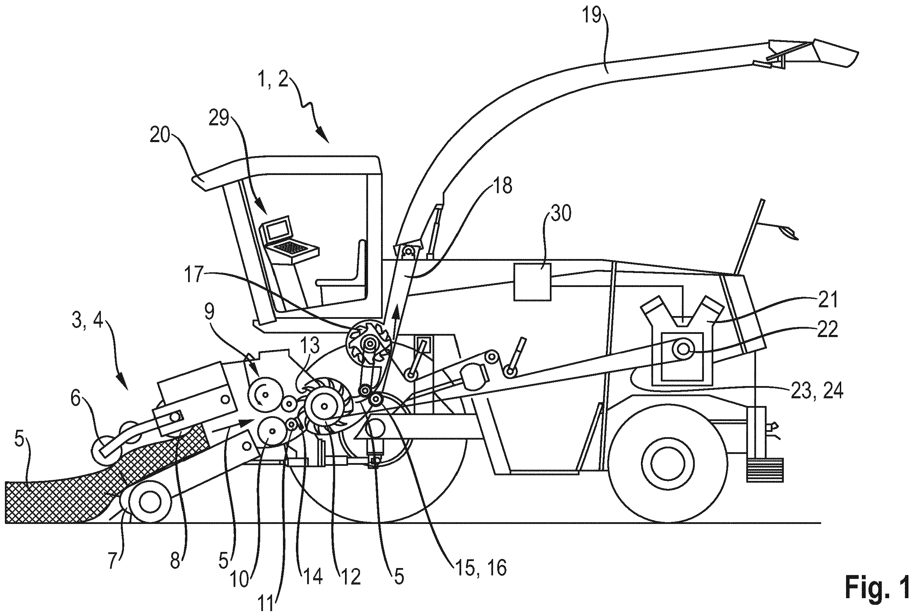

Fig. 1 zeigt eine als Feldhäcksler 2 ausgebildete landwirtschaftliche Arbeitsmaschine 1, die in ihrem frontseitigen Bereich ein als Pick-up 4 ausgeführtes Vorsatzgerät 3 aufnimmt. Die Pick-up 4 ist so gestaltet, dass sie Erntegut 5 zwischen einer Niederhaltereinrichtung 6 und einer Aufsammeltrommel 7 aufnimmt und im rückwärtigen Bereich der Pickup 4 einer Querförderschnecke 8 zuführt. Die Querförderschnecke 8 übergibt das Erntegut 5 nahezu mittig der Pick-up 4 nachgeordneten Einzugsorganen 9. Im dargestellten Ausführungsbeispiel werden die Einzugsorgane 9 von paarweise angeordneten Einzugswalzen 10 und diesen nachgeordneten Vorpresswalzen 11 gebildet. Nachdem das Erntegut 5 die Einzugsorgane 9 passiert hat, wird es in deren rückwärtigen Bereich an eine Häckseltrommel 12 übergeben. Die Häckseltrommel 12 nimmt über ihren Umfang verteilt eine Vielzahl von Häckselmessern 13 auf, die das Erntegut 5 im Zusammenwirken mit einer Gegenschneide 14 zerkleinern. Durch die kinetische Energie der umlaufenden Häckseltrommel 12 tritt das Erntegut 5 im rückwärtigen Bereich der Häckseltrommel 12 mit hoher Geschwindigkeit aus dieser aus und wird an paarweise angeordnete Crackerwalzen 15 übergeben. Die Crackerwalzen 15 bilden dabei eine sogenannte Nachzerkleinerungseinrichtung 16. Nachdem das Erntegut 5 die Nachzerkleinerungseinrichtung 16 passiert hat, gelangt dieses in den Wirkbereich eines Nachbeschleunigers 17. Der Nachbeschleuniger 17 prägt dem Erntegut 5 in an sich bekannter Weise zusätzliche kinetische Energie auf, mittels derer das Erntegut 5 über einen in vertikaler Richtung weisenden Auswurfschacht 18 und einen diesem nachgeordneten schwenk- und drehbeweglichen Auswurfkrümmer 19 aus dem Feldhäcksler 2 herausgefördert wird.

Weiter ist dem Feldhäcksler 2 zumindest ein Antriebsmotor 21 zugeordnet, dessen abtriebsseitige Riemenscheibe 22 von einem Antriebsriemen 23 umschlungen ist. Der Antriebsriemen 23 bildet ein bewegliches Antriebsmittel eines Antriebsstrangs 24 zum rotierenden Antreiben der Arbeitsaggregate des Feldhäckslers 2. In einer Kabine 20 des Feldhäckslers 2 ist ein Bediensystem 29 angeordnet, mittels dem Betriebsparameter der verschiedenen Arbeitsaggregate des Feldhäckslers 2 einstellbar und einer Bedienperson durch Visualisierung zur Kenntnis bringbar sind. Ein solches Bediensystem kann entsprechend auf einem selbstfahrenden Mähdrescher zum Einsatz kommen, um dessen unterschiedliche Arbeitsaggregate einstellen und überwachen zu können.

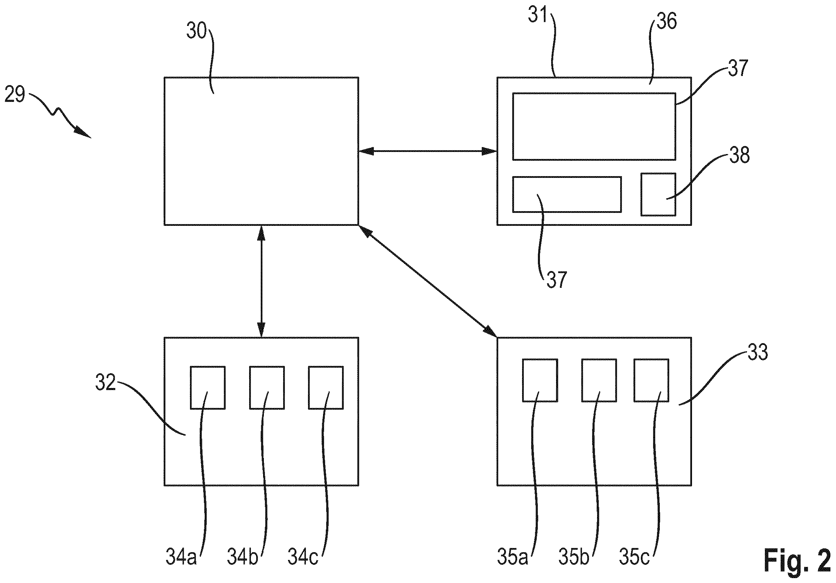

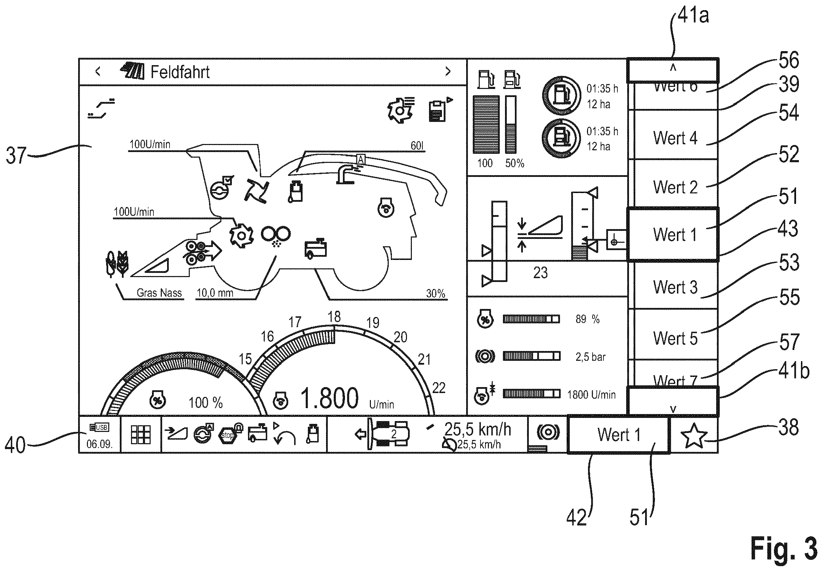

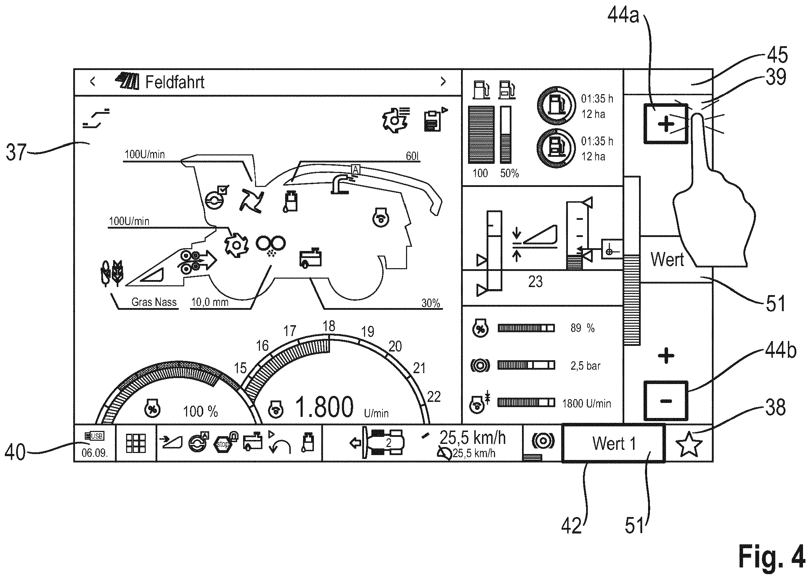

In Fig. 2 ist schematische Darstellung des Bediensystems 29 der Arbeitsmaschine 1 gezeigt. Das Bediensystem 29 umfasst eine Steuerungsvorrichtung 30, welche mit einer Anzeigeeinheit 31, einem Fahrhebel 32 sowie einem Bedienpanel 33 signaltechnisch verbunden ist. Die Steuerungsvorrichtung 30 kann bevorzugt auch der Überwachung und Ansteuerung der Arbeitsaggregate dienen. An dem Fahrhebel 32 sind mehrere Bedienelemente 34a, 34b, 34c angeordnet, von denen zumindest zwei als Mehrfach-Bedienelemente ausgeführt sind. Das Bedienpanel 33 weist ebenfalls mehrere Bedienelemente 35a, 35b, 35c auf. Dem Bedienelement 34a des Fahrhebels 32 bzw. dem Bedienelement 35a des Bedienpanels 33 ist eine bevorzugte Schnellauswahlfunktion zugeordnet, um einen spezifischen Betriebsparameter des Feldhäckslers 2 auf der Anzeigeeinheit 31 unter Umgehung einer mehrere Navigationsebenen aufweisenden Menüstruktur direkt anzeigen und verändern zu können. Das Bedienpanel 33 kann insbesondere Bestandteil der Anzeigeeinheit 31 sein. Die Anzeigeeinheit 31 weist einen berührungssensitiven Bildschirm 36 mit mehreren Visualisierungsbereichen 37 zur Anzeige von verschiedenen Betriebsparametern des Feldhäckslers 2 sowie zumindest einem virtuellen Bedienelement 38, welches der Bedienung dient. Vorliegend ist dem virtuellen Bedienelement 38 der Anzeigeeinheit 31 eine aktuell bevorzugte Schnellauswahlfunktion zugeordnet. Auf die Ausgestaltung der Anzeigeeinheit 31 sowie die Bedienung des Bediensystems 29 wird in den nachfolgenden Fig. 3 und 4 näher eingegangen.

Die Darstellung der verschiedenen Betriebsparameter erfolgt aufgrund der Komplexität in mehreren, hierarchisch abgestuften Navigationsebenen. Um auf eine spezifische Navigationsebene und damit tieferliegende Navigationsebene zugreifen zu können, ist die Schnellauswahlfunktionen vorgesehen. Unter einer Schnellauswahlfunktion wird das direkte Aufrufen eines für die Ansteuerung der Arbeitsmaschine 1 spezifischen Bediendialogs von einer beliebigen Navigationsebene aus verstanden, welches das Einstellen und Verändern von Betriebsparametern des jeweiligen Arbeitsaggregates der Arbeitsmaschine 1 ermöglicht. Dieser unmittelbare Zugriff ist besonders bei einer Erntefahrt der Arbeitsmaschine 1 relevant, wenn ein einzelner oder mehrere Betriebsparameter fortlaufend angepasst werden müssen.

In Fig. 3 ist eine schematische Darstellung der Anzeigeeinheit 31 dargestellt, auf welcher durch die Betätigung eines der Bedienelemente 34a, 35a oder 38 von einer der Bedienkomponenten Fahrhebel 32, Bedienpanel 33 oder Anzeigeeinheit 31 ein Dialogfeld 39 geöffnet wird, innerhalb dessen verschiedene Schnellauswahlfunktionen 51 bis 57 dargestellt werden. Durch eine Betätigung eines Bedienelemente einer der Bedienkomponenten ist die bevorzugte Schnellauswahlfunktion aktivierbar, wobei die Aktivierung durch den Fahrhebel 32 und /oder das Bedienpanel 33 und/oder die Anzeigeeinheit 31 erfolgen kann.

Eine initiale Auswahl aus einer der Schnellauswahlfunktionen 51 bis 57, mit der eines der Bedienelemente 34a, 35a oder 38 der Bedienkomponenten, Fahrhebel 32, Bedienpanel 33 oder Anzeigeeinheit 31, belegt wird, erfolgt durch eine Vorkonfiguration mittels der Anzeigeeinheit 31. Die den Bedienelementen 34a, 35a und 38 zugeordnete bevorzugte Schnellauswahlfunktion 51 wird innerhalb des Dialogfeldes 39 zentral positioniert und als aktiv gekennzeichnet. Dies kann beispielsweise durch eine farbliche Hervorhebung oder eine sonstige visuell leicht wahrnehmbare Gestaltung erfolgen. In dem dargestellten Ausführungsbeispiel ist eine Umrahmung 43 vorgesehen.

Unterhalb des Visualisierungsbereichs 37 ist ein Anzeigenbereich 40 positioniert, welcher in allen Navigationsebenen sichtbar ist. In dem Anzeigenbereich 40 werden dauerhaft arbeitsmaschinenrelevante Informationen visualisiert. Der Anzeigenbereich 40 umfasst ein Statusfeld 42, in dem die vorkonfigurierte bzw. getroffene Zuordnung eines Wertes des Betriebsparameters entsprechend der bevorzugten Schnellauswahlfunktion 51 dargestellt wird. Auf diese Weise hat die Bedienperson jederzeit eine Übersicht über die jeweils ausgewählte bevorzugte Schnellauswahlfunktion, hier die Schnellauswahlfunktion 51, die den Bedienelementen 34a, 35a und 38 zugeordnet und durch Betätigung eines dieser Bedienelemente 34a, 35a, 38 aktivierbar ist.

Weiterhin werden in dem Dialogfeld 39 virtuelle Tasten 41a, 41b dargestellt, welche eine Navigation zwischen den einzelnen Schnellauswahlfunktionen 51 bis 57 ermöglichen. Dabei erlaubt die listenförmige Darstellung es, diese endlos umlaufend zu durchlaufen. D.h., ausgehend von der aktuell bevorzugten Schnellauswahlfunktion 51 ließe sich durch eine fortgesetzte Betätigung der virtuellen Taste 41a bis zu der Schnellauswahlfunktion 56 vorspringen, welche innerhalb der Umrahmung 43 angezeigt würde, bevor nach einer weiteren Betätigung der virtuellen Taste 41a mit der Schnellauswahlfunktion 57 fortgefahren wird. Durch die Betätigung der virtuellen Taste 41b lässt sich in identischer Weise, jedoch gegensinnig, durch die Darstellung in dem Dialogfeld 39 navigieren. In gleicher Weise lässt sich die Navigation durch die Schnellauswahlfunktionen 51 bis 57 mittels der an dem Fahrhebel 32 und dem Bedienpanel 33 vorgesehenen, als Mehrfach-Bedienelement ausgebildeten, Bedienelemente 34b, 35b bewirken.

Fig. 4 zeigt die nach der Betätigung der Schnellauswahltaste 51 durch eine gezielte Berührung des Bildschirms im Dialogfeld 39 sich darstellende Navigationsebene zur Einstellung des der Schnellauswahlfunktion 51 zugeordneten Betriebsparameters. In dem Dialogfeld 39 wird nunmehr nur der mit der Schnellauswahlfunktion 51 ausgewählte Wert eines Betriebsparameters angezeigt, welcher im Zuge eines Verstell- und Auswahldialoges durch eine Betätigung virtueller Tasten 44a, 44b erhöht oder gesenkt werden kann. Hiermit korrespondierend lässt sich ein Erhöhen oder Senken des mit der Schnellauswahlfunktion 51 ausgewählten Wertes eines Betriebsparameters durch die als Mehrfach-Bedienelemente ausgebildeten Bedienelemente 34c, 35c des Fahrhebels 32 sowie des Bedienpanels 33 bewirken. Mit dem Bezugszeichen 45 ist ein virtuelles Tastenfeld der Anzeigeeinheit 31 bezeichnet, welches bei einer Betätigung zu einem Abbruch des dargestellten Dialogs führt, woraufhin zu einer Darstellung in dem Dialogfeld 39 zurückgesprungen wird, welche die Schnellauswahlfunktionen 51 bis 57 zeigt, wie in Fig. 3 dargestellt ist.

Die Übernahme einer neu ausgewählten Schnellauswahlfunktion wird wirksam, indem der innerhalb der Umrahmung 43 angezeigte Wert für eine der Schnellauswahlfunktionen 51 bis 57 durch Berühren bestätigt wird. Erfolgt die Auswahl mittels der Bedienelemente 34b, 35b Fahrhebels 32 oder des Bedienpanels 33, so wird die Auswahl durch eine Betätigung des Bedienelementes 34a, oder 35a durchgeführt. In dem Statusfeld 42 im Anzeigenbereich 40 wird automatisch der Betriebsparameter dargestellt, der durch die erfolgte Neuzuordnung der Schnellauswahlfunktion bevorzugt wird. In allen Fällen erfolgt nach einer veränderten Auswahl und Bestätigung einer neuen Schnellauswahlfunktion als bevorzugte Schnellauswahlfunktion eine durch die Steuerungsvorrichtung 30 initiierte Neubelegung der jeweiligen Bedienelemente 34a, 35a, 38, mittels der die bevorzugte Schnellauswahlfunktion aktivierbar ist. Dies geschieht unabhängig davon, ob die Änderung durch die Anzeigeeinheit 31, den Fahrhebel 32 oder das Bedienpanel 33 durchgeführt wurde.

Gemäß einem weiteren Aspekt ist vorgesehen, dass die Steuerungsvorrichtung 30 dazu eingerichtet ist, die Darstellung des Dialogfeldes 39 automatisch innerhalb eines vorgebbaren Zeitfensters zu beenden. Dabei kann vorgesehen sein, dass eine während des aktiven Dialogfeldes 39 vorgenommene Auswahl und/oder Einstellung automatisch übernommen und aktiviert wird.

**Bezugszeichenliste**

| | | | |
|---|---|---|---|
| 1 | Arbeitsmaschine | 34a | Bedienelement |
| 2 | Feldhäcksler | 34b | Bedienelement |
| 3 | Vorsatzgerät | 34c | Bedienelement |
| 4 | Pickup | 35a | Bedienelement |
| 5 | Erntegut | 35b | Bedienelement |
| 6 | Niederhaltereinrichtung | 35c | Bedienelement |
| 7 | Aufsammeltrommel | 36 | Bildschirm |
| 8 | Querförderschnecke | 37 | Visualisierungsbereich |
| 9 | Einzugsorgane | 38 | Virtuelles Bedienelement |
| 10 | Einzugswalzen | 39 | Dialogfeld |
| 11 | Vorpresswalzen | 40 | Anzeigenbereich |
| 12 | Häckseltrommel | 41a | Virtuelle Taste |
| 13 | Häckselmesser | 41b | Virtuelle Taste |
| 14 | Gegenschneide | 42 | Statusfeld |
| 15 | Crackerwalzen | 43 | Umrahmung |
| 16 | Nachzerkleinerungseinrichtung | 44a | Virtuelle Taste |
| 17 | Nachbeschleuniger | 44b | Virtuelle Taste |
| 18 | Auswurfschacht | 45 | Tastenfeld |
| 19 | Auswurfkrümmer | | |
| 20 | Kabine | 51 | Schnellauswahlfunktion |
| 21 | Antriebsmotor | 52 | Schnellauswahlfunktion |
| 22 | Riemenscheibe | 53 | Schnellauswahlfunktion |
| 23 | Antriebsriemen | 54 | Schnellauswahlfunktion |
| 24 | Antriebsstrang | 55 | Schnellauswahlfunktion |
| 29 | Bediensystem | 56 | Schnellauswahlfunktion |
| 30 | Steuerungsvorrichtung | 57 | Schnellauswahlfunktion |
| 31 | Anzeigeeinheit | | |
| 32 | Fahrhebel | | |
| 33 | Bedienpanel | | |

## Patentansprüche

1. Bediensystem (29) für eine landwirtschaftliche Arbeitsmaschine (1), umfassend:
- eine Steuerungsvorrichtung (30), die mit einer Anzeigeeinheit (31), einem Fahrhebel (32) sowie einem Bedienpanel (33) signaltechnisch verbunden ist, ,wobei zumindest der Fahrhebel (32) mehrere Bedienelemente (34a, 34b, 34c) umfasst,
wobei die Anzeigeeinheit (31) als ein berührungssensitiver Bildschirm (36) mit einem oder mehreren Visualisierungsbereichen (37) sowie mehreren virtuellen Bedienelementen (38, 41a, 41b, 44a, 44b) ausgeführt ist, wobei jeweils einem der Bedienelemente (38, 34a, 35a) der Anzeigeeinheit (31), des Fahrhebels (32) und des Bedienpanels (33) eine bevorzugte Schnellauswahlfunktion (51) aus einer Vielzahl von verschiedenen Schnellauswahlfunktionen (51 bis 57) zur Einstellung von einem einer jeweiligen Schnellauswahlfunktion (51 bis 57) zugeordneten Betriebsparameter der Arbeitsmaschine (1) vorkonfiguriert zugeordnet ist, welcher mittels der Anzeigeeinheit (31) bei einer Aktivierung darstellbar ist, wobei die dem jeweiligen Bedienelement (38, 34a, 35a) zugeordnete Schnellauswahlfunktion (51) mittels der Anzeigeeinheit (31) und/oder des Fahrhebels (32) und/oder des Bedienpanels (33) aktivierbar ist.

2. Bediensystem (29) nach Anspruch 1, **dadurch gekennzeichnet, dass** die vorkonfigurierte Belegung des jeweiligen Bedienelementes (38, 34a, 35a) mit der bevorzugten Schnellauswahlfunktion (51) mittels der Anzeigeeinheit (31) und/oder des Fahrhebels (32) und/oder des Bedienpanels (33) veränderbar ist.

3. Bediensystem (29) nach Anspruch 1 oder 2, **dadurch gekennzeichnet, dass** eine durchgeführte Konfigurationsänderung der Zuweisung der bevorzugten Schnellauswahlfunktion (51 bis 57) durch die Steuerungsvorrichtung (30) auf das jeweilige Bedienelement (38, 34a, 35a) der Anzeigeeinheit (31), des Fahrhebels (32) und/oder des Bedienpanels (33) übertragbar ist.

4. Bediensystem (29) nach einem der Ansprüche 1 bis 3, **dadurch gekennzeichnet, dass** eine Betätigung des Bedienelementes (34a, 35a) an dem Fahrhebel (32) oder dem Bedienpanel (33), welchem die bevorzugte Schnellauswahlfunktion (51) zugewiesen ist, eine korrespondierende Änderung der Darstellung auf dem Bildschirm (36) der Anzeigeeinheit (31) bewirkt.

5. Bediensystem (29) nach einem der Ansprüche 1 bis 4, **dadurch gekennzeichnet, dass** dem jeweiligen Bedienelement (38, 34a, 35a) eine bevorzugte Schnellauswahlfunktion (51 bis 57) veränderbar zugewiesen ist.

6. Bediensystem (29) nach einem der Ansprüche 1 bis 5, **dadurch gekennzeichnet, dass** durch die Betätigung des Bedienelementes (38, 34a, 35a) ein Dialogfeld (39) in einem Visualisierungsbereich (37) auf dem Bildschirm (36) der Anzeigeeinheit (31) darstellbar ist, welches die Konfiguration der den Schnellauswahlfunktionen (51 bis 57) zugeordneten Betriebsparameter der Arbeitsmaschine (1) ermöglicht.

7. Bediensystem (29) nach Anspruch 6, **dadurch gekennzeichnet, dass** die Auswahl einer Schnellauswahlfunktion (51 bis 57) innerhalb des Dialogfeldes (39) durch die Betätigung zumindest eines Bedienelementes (34a, 35a) an dem Fahrhebel (32) oder dem Bedienpanel (33) oder durch eine Berührung des Bildschirms (36) der Anzeigeeinheit (31) von einer der innerhalb des Dialogfeldes(39) dargestellten den Schnellauswahlfunktionen (51 bis 57) zugeordneten Betriebsparameter erfolgt.

8. Bediensystem (29) nach Anspruch 7, **dadurch gekennzeichnet, dass** nach Auswahl einer Schnellauswahlfunktion (51 bis 57) ein Einstellungsmenü, vorzugsweise innerhalb des Dialogfeldes (39), einblendbar ist, welches eine Veränderung des der Schnellauswahlfunktion (51 bis 57) zugeordneten Betriebsparameters ermöglicht.

9. Bediensystem (29) nach Anspruch 8, **dadurch gekennzeichnet, dass** die Veränderung des Betriebsparameters durch eine Berührung von auf dem Bildschirm (36) dargestellten virtuellen Bedienelementen (41a, 41b, 44a, 44b) oder durch die Betätigung von zumindest einem als Mehrfach-Bedienelement ausgeführtem Bedienelement (34b, 34c; 35b, 35c) des Fahrhebels (32) oder des Bedienpanels (33) durchführbar ist.

10. Bediensystem (29) nach einem der vorangehenden Ansprüche, **dadurch gekennzeichnet, dass** die Steuerungsvorrichtung (30) dazu eingerichtet ist, die Darstellung des Dialogfeldes (39) automatisch innerhalb eines vorgebbaren Zeitfensters zu beenden.

11. Bediensystem (29) nach einem der vorangehenden Ansprüche, **dadurch gekennzeichnet, dass** auf dem Bildschirm (36) ein permanent dargestellter Anzeigenbereich (40) vorgesehen ist, der unter anderem der Darstellung eines Einstellwertes eines der bevorzugten Schnellauswahlfunktion zugeordneten Betriebsparameters der Arbeitsmaschine (1) dient.

12. Landwirtschaftliche Arbeitsmaschine (1), insbesondere selbstfahrende Erntemaschine (2), mit einem Bediensystem (29) nach einem der Ansprüche 1 bis 11.

## Claims

1. An operating system (29) for an agricultural working machine (1), comprising:
- a control device (30) which is connected, for the purposes of signalling, to a display unit (31), a drive lever (32) as well as an operations panel (33), wherein at least the drive lever (32) comprises a plurality of operational elements (34a, 34b, 34c), wherein the display unit (31) is configured as a touch-sensitive display screen (36) with one or more visualisation zones (37) as well as a plurality of virtual operational elements (38, 41a, 41b, 44a, 44b), wherein a preferred quick select function (51) out of a plurality of different quick select functions (51 - 57) for adjusting an operational parameter of the working machine (1) associated with a respective quick selection function is allocated, in a pre-configured manner, to a respective one of the operational elements (38, 34a, 35a) of the display unit (31), the drive lever (32) and the operations panel (33) and which can be presented by means of the display unit (31) upon activation, wherein the quick select function (51) associated with the respective control element (38, 34a, 35a) can be activated by means of the display unit (31) and/or the drive lever (32) and/or the operations panel (33).

2. The operating system (29) according to claim 1, **characterized in that** the pre-configured assignment of the respective operational element (38, 34a, 35a) to the preferred quick select function (51) can be changed by means of the display unit (31) and/or the drive lever (32) and/or the operations panel (33).

3. The operating system (29) according to claim 1 or claim 2, **characterized in that** a configurational change which has been made to the allocation of the preferred quick select function (51 to 57) can be transferred by the control device (30) to the respective operational element (38, 34a, 35a) of the display unit (31), the drive lever (32) and/or the operations panel (33).

4. The operating system (29) according to one of claims 1 to 3, **characterized in that** an actuation of the operational element (34a, 35a) on the drive lever (32) or on the operations panel (33) to which the preferred quick select function (51) has been allocated carries out a corresponding change in the presentation on the display screen (36) of the display unit (31).

5. The operating system (29) according to one of claims 1 to 4, **characterized in that** a preferred quick select function (51 to 57) is allocated to the respective operational element (38, 34a, 35a) in a manner which can be changed.

6. The operating system (29) according to one of claims 1 to 5, **characterized in that** by means of the actuation of the operational element (38, 34a, 35a), a dialogue box (39) can be presented in a visualisation zone (37) on the display screen (36) of the display unit (31), which enables the operational parameters of the working machine (1) associated with the quick select functions (51 to 57) to be configured.

7. The operating system (29) according to claim 6, **characterized in that** the selection of a quick select function (51 to 57) within the dialogue box (39) is carried out by the actuation of at least one operational element (34a, 35a) on the drive lever (32) or on the operations panel (33) or from one of the operational parameters associated with the quick select functions (51 to 57) depicted in the dialogue box (39) by touching the display screen (36) of the display unit (31).

8. The operating system (29) according to claim 7, **characterized in that** after selecting a quick select function (51 to 57), a settings menu, preferably in the dialogue box (39), can be overlaid which enables the operational parameter associated with the quick select function (51 to 57) to be changed.

9. The operating system (29) according to claim 8, **characterized in that** the change to the operational parameter can be carried out by touching virtual operational elements (41a, 41b, 44a, 44b) presented on the display screen (36) or by actuating at least one operational element (34b, 34c; 35b, 35c) of the drive lever (32) or of the operations panel (33) which is configured as a multifunctional operational element.

10. The operating system (29) according to one of the preceding claims, **characterized in that** the control device (30) is configured to terminate the presentation of the dialogue box (39) automatically within a time frame which can be specified.

11. The operating system (29) according to one of the preceding claims, **characterized in that** a permanently presented display zone (40) is provided on the display screen (36) which, inter alia, functions to present a setting for one of the operational parameters of the working machine (1) associated with the preferred quick select function.

12. An agricultural working machine (1), in particular a selfpropelled harvesting machine (2), with an operating system (29) according to one of claims 1 to 11.

## Revendications

1. Système opératoire (29) pour une machine de travail agricole (1), incluant :
- un dispositif de commande (30) qui est en liaison signalétique avec une unité d'affichage (31), avec un levier d'avancement (32) ainsi qu'avec un panneau opératoire (33), au moins le levier d'avancement (32) incluant plusieurs éléments opératoires (34a, 34b, 34c),
l'unité d'affichage (31) étant conçue sous la forme d'un écran tactile (36) avec une ou plusieurs zones de visualisation (37) ainsi qu'avec plusieurs éléments opératoires virtuels (38, 41a, 41b, 44a, 44b), respectivement à un des éléments opératoires (38, 34a, 35a) de l'unité d'affichage (31), du levier d'avancement (32) et du panneau opératoire (33) étant associée de manière préconfigurée une fonction de sélection rapide préférentielle (51) parmi une pluralité de fonctions de sélection rapide différentes (51 à 57) pour instaurer un paramètre d'exploitation de la machine de travail (1) associé à une fonction de sélection rapide respective (51 à 57), lequel peut être représenté au moyen de l'unité d'affichage (31) en cas d'activation, la fonction de sélection rapide (51) associée à l'élément opératoire respectif (38, 34a, 35a) pouvant être activée au moyen de l'unité d'affichage (31) et/ou du levier d'avancement (32) et/ou du panneau opératoire (33).

2. Système opératoire (29) selon la revendication 1, **caractérisé en ce que** l'occupation préconfigurée de l'élément opératoire respectif (38, 34a, 35a) par la fonction de sélection rapide préférentielle (51) peut être modifiée au moyen de l'unité d'affichage (31) et/ou du levier d'avancement (32) et/ou du panneau opératoire (33) .

3. Système opératoire (29) selon la revendication 1 ou 2, **caractérisé en ce qu'**une modification configuratoire effectuée de l'assignation de la fonction de sélection rapide préférentielle (51 à 57) peut être transmise par l'intermédiaire du dispositif de commande (30) à l'élément opératoire respectif (38, 34a, 35a) de l'unité d'affichage (31), du levier d'avancement (32) et/ou du panneau opératoire (33).

4. Système opératoire (29) selon une des revendications 1 à 3, **caractérisé en ce qu'**un actionnement de l'élément opératoire (34a, 35a) sur le levier d'avancement (32) ou sur le panneau opératoire (33) auquel la fonction de sélection rapide préférentielle (51) est assignée provoque une modification correspondante de la représentation sur l'écran (36) de l'unité d'affichage (31).

5. Système opératoire (29) selon une des revendications 1 à 4, **caractérisé en ce qu'**une fonction de sélection rapide préférentielle (51 à 57) est assignée de manière modifiable à l'élément opératoire respectif (38, 34a, 35a).

6. Système opératoire (29) selon une des revendications 1 à 5, **caractérisé en ce que** l'actionnement de l'élément opératoire (38, 34a, 35a) permet de représenter sur l'écran (36) de l'unité d'affichage (31), dans une zone de visualisation (37), une boîte de dialogue (39) qui permet de configurer les paramètres d'exploitation de la machine de travail (1) associés aux fonctions de sélection rapide (51 à 57) .

7. Système opératoire (29) selon la revendication 6, **caractérisé en ce que** la sélection d'une fonction de sélection rapide (51 à 57) à l'intérieur de la boîte de dialogue (39) s'effectue en actionnant au moins un élément opératoire (34a, 35a) sur le levier d'avancement (32) ou sur le panneau opératoire (33) ou en touchant l'écran (36) de l'unité d'affichage (31) d'un des paramètres d'exploitation représentés à l'intérieur de la boîte de dialogue (39) et associés aux fonctions de sélection rapide (51 à 57).

8. Système opératoire (29) selon la revendication 7, **caractérisé en ce qu'**après la sélection d'une fonction de sélection rapide (51 à 57), un menu de réglages est affichable, de préférence à l'intérieur de la boîte de dialogue (39), lequel permet de modifier le paramètre d'exploitation associé à la fonction de sélection rapide (51 à 57) .

9. Système opératoire (29) selon la revendication 8, **caractérisé en ce que** la modification des paramètres d'exploitation est réalisable en touchant des éléments opératoires virtuels (41a, 41b, 44a, 44b) représentés sur l'écran (36) ou en actionnant au moins un élément opératoire (34b, 34c ; 35b, 35c) du levier d'avancement (32) ou du panneau opératoire (33) conformé en élément opératoire multiple.

10. Système opératoire (29) selon une des revendications précédentes, **caractérisé en ce que** le dispositif de commande (30) est agencé pour mettre fin automatiquement à la représentation de la boîte de dialogue (39) à l'intérieur d'une plage de temps prescriptible.

11. Système opératoire (29) selon une des revendications précédentes, **caractérisé en ce que** sur l'écran (36) est prévue une zone d'affichage représentée en permanence (40) qui sert entre autres à représenter une valeur de consigne d'un paramètre d'exploitation de la machine de travail (1) associé à la fonction de sélection rapide préférentielle.

12. Machine de travail agricole (1), en particulier machine de récolte automotrice (2), comprenant un système opératoire (29), selon une des revendications 1 à 11.
